# EUROPEAN PATENT SPECIFICATION

(11) **EP 2 832 278 B1**
(45) Date of publication and mention of the grant of the patent: **08.07.2015**
(21) Application number: 13178965.3
(22) Date of filing: 01.08.2013
(51) Int. Cl.: A47L 13/16, B32B 5/18, C08J 9/22, C08J 9/236, C08J 9/35, C08L 61/28

(54) **Composite material, manufacturing process therefor and uses thereof**
Verbundwerkstoff, Herstellungsverfahren dafür und Verwendungen davon
Matériau composite, son procédé de fabrication et ses utilisations

(43) Date of publication of application: 04.02.2015
(73) Proprietor: GO4HIT.BVBA, 2000 Antwerpen (BE)
(72) Inventor: Johnstone, Andrew, 2530 Boechout (BE)
(74) Representative: IPLodge bvba

(56) References cited:
- US-A- 4 385 131
- US-A1- 2007 061 991
- US-A1- 2012 216 832

## Description

### Technical field of the invention

The present invention relates to a composite material, a manufacturing process therefor and uses thereof.

### Background of the invention

A melamine-formaldehyde resin is a cross-linked resin produced by condensing melamine with formaldehyde. It has flame resistance (without the addition of flame retardants), has chemical resistance, has a application temperature up to 240°C, has abrasiveness and has constant physical properties over a wide temperature range. Porous open-cell melamine-formaldehyde resin, also known as open-cell melamine resin foam, additionally has low weight, good thermal insulation properties, high sound insulation capacity and low-temperature flexibility.

Porous open-cell melamine-formaldehyde resin is used as an insulating and soundproofing material and also as a cleaning abrasive.

Thermoforming is a standard process for providing insulating and soundproofing material with well-defined shapes for use, for example, in the automotive industry. Heat compression is also used to produce cleaning products such as sponges and pads, e.g. for floor cleaning equipment, with a longer lifetime and less liquid take-up than products produced without heat compression. It has highly hydrophilic and oleophilic due to its open-cell structure.

US 4,885,206 discloses a foam composite consisting of (a) one or more layers of a flexible melamine formaldehyde resin foam from 8 to 25 g/l in density and (b) one or more layers of a flexible polyimide foam from 8 to 40 g/l in density.

US 5,413,853 discloses a melamine resin foam comprising a foam body obtained by foaming a resin composition composed mainly of a melamine-formaldehyde condensate and a blowing agent, and hydrophobic component coated on said foam body, wherein said hydrophobic component is a silicone resin or a chloroprene rubber.

US 5,436,278 discloses a process for producing a melamine resin foam, which comprises foaming a resin composition comprising a melamine/formaldehyde condensate wherein the condensate is obtained by synthesis using a silane coupling agent, a blowing agent and an isocyanate having NCO equivalents of 125-500.

DE 20200400559U1 discloses cleaning sponge, particulary for cleaning of klitchen crockery, with a first cleaning body (10), which possesses a wiping surface (11) and a coupling surface (12) opposite to the wiping surface (11), and a second cleaning body (20) which possessses a scouring surface (21) and a coupling surface opposite to the scouring surface (21), which adjoins the coupling surface of the first cleaning body, whereby the first cleaning body is firmly bonded with the second cleaning body and whereby the first cleaning body (10) consists of highly resilient polyurethane foam, characterised in that the second cleaning body (20) consists of a melamine resin foam.

EP 633283A1 discloses a melamine resin foam comprising a foam body obtained by foaming a resin composition composed mainly of a melamine-formaldehyde condensate and a blowing agent, and hydrophobic component coated on said foam body.

US 6,503,615 discloses a wiping cleaner composed of a porous material of an open-cell structure which has a density of 5 to 50 kg/m³, a tensile strength of 0.6 to 1.6 kg/cm², an elongation at break of 8 to 20%, a cell number of 80 to 300 cells/25 mm, and 1 to 60 parts by weight of an anionic surfactant per 100 parts by weight of the porous material, and which has a fine irregular wiping surface wherein upon wiping, particles are peeled from the wiping surface by friction, wherein the porous material is preferably a melamine resin foam.

US 2007-0157948A discloses a cleaning implement (1) comprising a modified open-cell foam (2) with a density in the range from about 5 to about 1,000 kg/m.sup.3 and with an average pore diameter in the range from about 1 µm to about 1 mm, comprising an amount in the range from about 1 to about 2,500% by weight, based on the weight of the unmodified open-cell foam, of at least about one water-insoluble polymer (b), selected from: polystyrene, styrene copolymers, polybutadiene, butadiene copolymers, polyvinylesters, polyvinylethers, copolymers from (meth)acrylic acid with at least one (meth)acrylate, polyurethanes, polyethylene and wax derivatives thereof, polypropylene and wax derivatives thereof, polyethylene-copolymers, polypropylene-copolymers, and ethylene-propylene-diene-copolymers and combinations thereof; with the proviso that styrene-acrylonitrile-C₁-C₁₀-alkyl (meth)acrylate terpolymers, styrene-butadiene-n-butyl acrylate terpolymers, and styrene-maleic anhydride copolymers are excluded.

US 2010-0273907A1 discloses a modified open-cell aminoplastic foam with a density in the range from 5 to 1,000 kg/m³ and with an average pore diameter in the range from 1 µm to 1 mm, comprising an amount in the range from 1 to 2,500% by weight, based on the weight of the unmodified open-cell foam, of at least one water-insoluble polymer (b), selected from polystyrene, styrene copolymers, polybutadiene, butadiene copolymers, polyvinylesters, polyvinylethers, copolymers from (meth)acrylic acid with at least one (meth)acrylate, and polyurethanes, with the proviso that styrene-acrylonitrile-C₁-C₁₀-alkyl (meth)acrylate terpolymers, styrene-butadiene-n-butyl acrylate terpolymers, and styrene-maleic anhydride copolymers are excluded.

US 2011-0232680A discloses a cleaning implement (1) comprising a hybrid foam (2) wherein said hybrid foam comprises a melamine formaldehyde resin as foamable reactive resins, and a substrate material, wherein said substrate material is selected from the group consisting of mineral fibres, animal fibres, plant fibres, chemical fibres, natural fibres, synthetic fibres, fibers of nonwoven fabrics, fibres of woven materials and mixtures thereof, with the substrate material being preferably selected from the group consisting of polyurethane resins, polyester resins, epoxides and mixtures thereof.

US 8,173,716 discloses an open-cell foam selected from the group of foams based on a melamine-formaldehyde condensation product, a polyurethane or a polyimide, wherein the foam has been modified with at least one hydrophobin.

US 2013-0048027A discloses an abrasive pad for cleaning microstructured tile surfaces composed of mineral substances, the abrasive pad comprising: a backing disc; and a wear layer formed of a melamine composite resin including different resin parts bonded with a water-insoluble adhesive. US 2013-0048027A further discloses a cleaning pad to be used in combination with a motorized floor cleaning machine, the cleaning pad comprising: a scrubbing surface made exclusively of melamine composite foam; a backing disc having substantially the same diameter as said scrubbing surface; and a seven-layer water-insoluble glue fixing said backing disc to said melamine composite foam.

Conventional motorized floor cleaning or polishing machines have typically used abrasive floor cleaning pads that are unable to conform to floor surface irregularities. Due to that inability, they cannot adequately clean hard surface floors, especially those with micro-porous systems (depressions and/or scratches), which is necessary to achieve an anti-slip category in public and private areas.

### Summary of the invention

It is an object of the present invention to provide a composite material with significantly improved properties including polishing and/or cleaning properties and longer lifetime.

An advantage of the present invention is the capability of the composite material to clean non-slip floors e.g. class R9, R10, R11 and R12 floors under DIN 51130, particularly for concrete and epoxy floors compared with melamine-formaldehyde pads.

A further advantage of the present invention is the capability of the composite material to retain its physical integrity without appreciable loss in thickness when cleaning non-slip floors e.g. class R9, R10, R11 and R12 floors under DIN 51130, particularly for concrete and epoxy floors.

A still further advantage of the present invention is that the composite pads can be used without prewetting of the surfaces to be cleaned.

A still further advantage of the present invention is the capability of the composite material to retain its cleaning properties although the components wear at different rates resulting in a non-flat surface if observed under conditions in which no load is applied to the composite material.

It has been surprising found that pads of the composite material obtainable with the process of the present invention have a longer lifetime when used with a motorised floor cleaning machine than pads using open cell melamine formaldehyde resin even after thermal compression and in particular have a lower tendency to tear. The use of mm-sized particles of latex and/or polyurethane foam in addition to mm-size particles of porous open cell melamine formaldehyde resin e.g. 30 to 70% by weight of polyurethane foam to 70 to 30% by weight of porous open cell melamine formaldehyde resin not only increases the retained bulk-water absorption/mm pad thickness considerably rendering the motorised floor cleaning machine more manageable, but also increases the lifetime of the cleaning pads. The lifetime of such pads is surprisingly further extended by further permanent compression of the composite material in a subsequent thermal compression step, which further increases the retained bulk-water absorption/mm pad thickness. In addition pads, with a composite according to the present invention with latex and open cell melamine formaldehyde resin has the combined effect of both cleaning and polishing in the area of concrete and epoxy floors.

Comparative evaluation of the cleaning pads on the market with the composite materials of the present invention showed that: the pad durability increased in the order of regular melamine-formaldehyde resin (e.g. Basotect®) inferior to thermally compressed regular melamine-formaldehyde resin (e.g. Basotect®) inferior to the composite foam of white and grey types of open-cell melamine-formaldehyde resin marketed by Charlott Produkte Dr Rauwald GmbH inferior to the composite material of the present invention inferior to the composite material of the present invention with additional heat compression treatment.

According to a first aspect of the present invention, a process for producing a composite material is provided, the process comprising the steps of: providing mm-sized particles comprising at least particle of a porous optionally at least partially compressed open-cell melamine formaldehyde resin and mm-sized particles of at least one non-rigid foamed resin; mixing said particles with at least one reactive adhesive in a concentration of 6 to 18 g of reactive adhesive per 100 g of mm-sized particles; reacting said reactive adhesive with said particles in the presence of aerial moisture thereby bonding said particles together during said mixing process; transporting said mixture into a mould; and irreversibly compressing said mixture to a block in a mould without additional heat to a density greater than 50 kg/m³ (0.050 g/cm³) preferably greater than 65 kg/m³ (0.065 g/cm³) to form a block of said composite material.

According to a second aspect of the present invention, a composite material is provided, the composite material being obtainable by the process according to the first aspect of the present invention.

According to a third aspect of the present invention, a laminate is provided, the laminate comprising the above-mentioned composite material, said laminate preferably comprising a backing material e.g. a material having cleaning properties, such as a synthetic shammy, or a material directly mountable on a cleaning machine or holder and/or a polyurethane foam.

According to a fourth aspect of the present invention, a use is provided for the composite material according to the second aspect of the present invention or the laminate according to the third aspect of the present invention for polishing and/or cleaning applications for example as a pad for polishing and/or cleaning with a liquid, for example water, optionally with at least one cleaning-enhancing additive and/or a degreaser.

According to a fifth aspect of the present invention, a use is provided for the composite material according to the second aspect of the present invention or laminate according to the third aspect of the present invention for insulation applications.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices.

The above and other characteristics, features and advantages of the present invention will become apparent from the following detailed description. This description is given for the sake of example only, without limiting the scope of the invention. The reference figures quoted below refer to the attached drawings.

### Brief description of the drawings

Figure 1 shows the cleaning effect realised on an R10 antislip epoxy floor with a Wetrok® Servomatic 43 KA motorized floor cleaner with a type D pad adjudged to be very good.
Figure 2 shows a high resolution black and white image of the original state of the floor clearly showing the structure of the grey-blue epoxy floor coating.
Figure 3 shows a high resolution black and white image of a track made by cleaning with a Numatic LoLine NLL332 motorised floor cleaner with a type E pad with just water on the left side and the original dirty floor on the right.
Figure 4 shows a circular patch showing the original state of the blue-grey epoxy floor coating surrounded by the dirty floor prior to cleaning with the Numatic LoLine NLL332 motorised floor cleaner with a type E pad.
Figures 5 to 9 are different images showing an approximately vertical uncleaned area with on the left a track made by cleaning with a Numatic LoLine NLL332 motorised floor cleaner with type E pad with water to which degreaser had been added and on the right a track made by cleaning the same motorized floor cleaner with type E pad, but with just water.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B. The meaning of the word "comprising" encompasses all the specifically mentioned features as well as optional, additional, unspecified ones, whereas the term "consisting of" only includes those features as specified in the claim. Therefore, "comprising" includes the term "consisting of", so that the amendment from the former into the latter term does not extend beyond the content of the application as originally filed.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

### Definitions

### Melamine has the IUPAC name 1,3,5-triazine-2,4,6-triamine.

The term "mm-sized particles", as used in disclosing the present invention, means particles having a diameter in the range of ca. 1 mm to ca. 50 mm, preferably in the range of ca. 4 mm to ca. 33 mm and particularly preferably in the range of ca. 8 mm to ca. 25 mm.

The term "non-rigid foamed resin" means that the foamed resin is non-rigid at ambient temperatures, the term differentiating from rigid foamed resin such as expanded polystyrene.

The anti-slip surfaces on which cleaning experiments were performed are characterized by the classes of anti-slip surfaces defined in DIN 51130 as given in the table below:

| Class | Frictional coefficient | Slip angle [°] |
|---|---|---|
| R9 | 0.11-0.18 | 6-10 |
| R10 | 0.18-0.34 | 10-19 |
| R11 | 0.34-0.51 | 19-27 |
| R12 | 0.51-0.70 | 27-35 |
| R13 | greater than 0.70 | greater than 35 |

The term "aerial moisture", as used in disclosing the present invention, means moisture in the air.

HDI is an abbreviation for 1,6-hexane diisocyanate.

TDI is an abbreviation for toluene diisocyanate (toluylene diisocyanate).

MDI is an abbreviation for methylene diphenyl diisocyanate, which exists in three isomers, 2,2'-MDI, 2,4'-MDI, and 4,4'-MDI (methylene diphenyl 4,4'-diisocyanate also known as diphenylmethane-4,4'-diisocyanate). The position of the isocyanate groups influences their reactivity. In 4,4'-MDI, the two isocyanate groups are equivalent but in 2,4'-MDI the two groups display highly differing reactivities. The group at the 4-position is approximately four times more reactive than the group at the 2-position due to steric hindrance.

IPDI is an abbreviation for isophorondiisocyanate.

PU is an abbreviation for polyurethane.

M-F resin is an abbreviation for melamine-formaldehyde resin.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

### Process for producing a composite material

According to a first aspect of the present invention, a process for producing a composite material is provided, the process comprising the steps of: providing mm-sized particles comprising at least particle of a porous optionally at least partially compressed open-cell melamine formaldehyde (M-F) resin and mm-sized particles of at least one non-rigid foamed resin; mixing said particles with at least one reactive adhesive in a concentration of 6 to 18 g of reactive adhesive per 100 g of mm-sized particles; reacting said reactive adhesive with said particles in the presence of aerial moisture thereby bonding said particles together during said mixing process; transporting said mixture into a mould; and irreversibly compressing said mixture to a block in a mould without additional heat to a density greater than 50 kg/m³ (0.050 g/cm³) preferably greater than 65 kg/m³ (0.065 g/cm³) to form a block of said composite material.

According to a preferred embodiment of the first aspect of the present invention, the particles of porous open-cell M-F are provided by grinding M-F resin comprising porous open-cell and non-porous parts into particles of porous open-cell and non-porous melamine formaldehyde resin and separating said porous open-cell melamine formaldehyde resin particles from said non-porous M-F resin particles, the non-porous M-F resin being preferably a surface skin formed during the manufacture of porous open-cell M-F resin.

According to another preferred embodiment of the first aspect of the present invention, after irreversibly compressing said mixture to a block in a mould without additional heat to a density greater than 50 kg/m³ (0.050 g/cm³) the block is allowed to harden in the block for at least 8 h before cutting to size, with a hardening time of 10 h being preferred.

According to another preferred embodiment of the first aspect of the present invention, the concentration of reactive adhesive in the mixture is 8 to 12 g per 100 g of mm-sized particles.

According to another preferred embodiment of the first aspect of the present invention, the density is at most (i.e. less than or equal to) 90 kg/m³.

According to another preferred embodiment of the first aspect of the present invention, of the mm-sized particles of porous open-cell melamine formaldehyde resin up to 100% by weight of the particles are compressed to some extent, with at least 50% by weight being preferred and a degree of compression of at least 50% being preferred.

According to another preferred embodiment of the first aspect of the present invention, said mm-sized particles of at least one non-rigid foamed resin are mm-sized particles of latex and/or mm-sized polyurethane foam particles, preferably with at least 10% by weight of said mm-sized particles are mm-sized polyurethane foam particles, with at least 15% by weight being particularly preferred, at least 20% by weight being especially preferred, at least 25% by weight being particularly especially preferred and at least 40% by weight being even more particularly especially preferred.

According to another preferred embodiment of the first aspect of the present invention, said mm-sized particles of at least one non-rigid foamed resin are mm-sized particles of latex and/or mm-sized polyurethane foam particles, preferably with at least 10% by weight of said mm-sized particles are mm-sized latex particles, with at least 15% by weight being particularly preferred, at least 20% by weight being especially particularly preferred, at least 25% by weight being particularly especially preferred and at least 40% by weight being even more particularly especially preferred.

According to another preferred embodiment of the first aspect of the present invention, said mixing process is performed in a mixer (analogously to a concrete mixer), the mixing blades preferably transporting the mixture into the mould. The mixer can be advantageously operated at 85 rpm.

The mould can, for example, have a bottom with the dimensions 2.9 x 1.06 m² and a height of 0.95 m with holes at 2 cm intervals with compression, for example, to a height of 0.20 m.

According to another preferred embodiment of the first aspect of the present invention, said reactive adhesive, if a liquid as such or as a solution and if a solid as a solution, is sprayed from at least one nozzle into the stirred mm-sized in said mixing process. This spraying process is carried out at a pressure of 300 to 800 bar (30 to 80 MPa), preferably 400 to 650 bar (40 to 65 MPa).

According to another preferred embodiment of the first aspect of the present invention, the reactive adhesive is an aromatic polyisocyanate, preferably TDI or MDI.

According to another preferred embodiment of the first aspect of the present invention, the process time is in the range of about 3 to about 12 minutes.

According to another preferred embodiment of the first aspect of the present invention, the block of composite materials is exclusive of mineral substances.

According to another preferred embodiment of the first aspect of the present invention, the composite material produced is subsequently permanently thermally compressed by at least 15% under a pressure of 1.5 x 10³ to 6.0 x 10³ kg/m², with a compression of 25% being preferred and a compression of 40% being particularly preferred.

According to another preferred embodiment of the second aspect of the present invention, the composite material produced from a mixture of mm-sized particles of open-cell M-F resin and mm-sized polyurethane particles is subsequently permanently compressed by at least 15% at a temperature of 180 to 220°C under a pressure of 1.5 x 10³ to 6.0 x 10³ kg/m², with a compression of 25% being preferred and a compression of 40% being particularly preferred. It has been found that the higher the compression temperature, the shorter the compression time required, a time of about two minutes being preferred at a temperature of about 220°C.

### Composite material

According to a second aspect of the present invention, a composite material is provided, the composite material being obtainable by the process according to the first aspect of the present invention.

According to a preferred embodiment of the second aspect of the present invention, the composite material comprises polyurethane bonding between said mm-sized optionally at least partially compressed porous open-cell melamine-formaldehyde (M-F) resin particles, wherein said polyurethane bonding is a result of the reaction of a polyisocyanate with reactive groups in said resin particles in the presence of aerial moisture and preferably in the presence of a catalyst to accelerate said bonding process (accelerator).

According to another preferred embodiment of the second aspect of the present invention, the composite material is exclusive of abrasive particles in addition to the particles of a porous open-cell M-F resin.

According to another preferred embodiment of the second aspect of the present invention, the composite material is exclusive of mineral substances.

According to another preferred embodiment of the second aspect of the present invention, the composite material is at least 3 mm thick, with at least 5 mm thick being preferred.

The composite materials according to the present invention can, for example, contain:

| PU foam (wt% of particles) | latex (wt% of particles) | porous open-cell not-thermally-compressed M-F resin (wt% of particles) |
|---|---|---|
| | 50 | 50 |
| 50 | | 50 |
| 40 | | 60 |

### Melamine-formaldehyde resin

In CA 1151350A BASF disclose a process for the preparation of a resilient foam based on a melamine-formaldehyde (M-F) condensate, wherein a very concentrated aqueous solution or dispersion which contains a M-F precondensate, an emulsifier, a volatile blowing agent and a curing agent is foamed under conditions such that initially there is only a slight increase in viscosity and the curing process, accompanied by a large increase in viscosity, only commences when foaming has substantially ended. The molar ratio of melamine to formaldehyde in the precondensate can vary within wide limits, namely from 1:1.5 to 1:4. The degree of condensation of the pre condensate should be sufficiently low to allow curing accompanied by further condensation. The mean molecular weight, measured osmometrically, can be from 200 to 1,000. The aqueous solution or dispersion of the melamine resin contains an emulsifier, preferably in an amount of from 0.5 to 5% by weight. The purpose of the emulsifier is to disperse the organic blowing agent homogeneously in the aqueous solution or dispersion; accordingly, the emulsifier ensures the stability of the system and prevents phase separation during foaming; such phase separation would result in an inhomogeneous foam. The higher the foaming temperature, the more effective the emulsifier must be, and the higher should be the concentration used. The aqueous solution or dispersion additionally contains a volatile blowing agent, preferably boiling at from -20 to 100°C e.g. hydrocarbons, halohydrocarbons, alcohols, ketones, ethers and esters. The curing agents employed are compounds which under the reaction conditions split off, or form, protons, which then catalyze the further condensation of the melamine resin. The amount used is from 0.01 to 20% by weight, based on the resin. Examples of suitable compounds are inorganic and organic acids. A critical feature a) of the present invention is the concentration of the pre condensate in its mixture with water (without additives). The optimum concentration is different for every foaming temperature, i.e. it depends on the nature of the blowing agent.

EP 17671A and EP 17672A disclose flexible foams based on a M-F condensation product which are notable for low density, good heat and sound insulation capability and favorable mechanical properties. They show standard or low flammability under German Standard Specification DIN 4102.

BASF manufactures melamine resin foam having open cells as Basotect® in the form of blocks for foam converters to process with low density (less than 10 kg/m³), good cleaning qualities, excellent sound absorption, a high flame-retardancy and temperature resistance.

The open cell melamine-formaldehyde particles used in the process of the first aspect of the present invention are selected from particles produced by comminution of open-cell M-F blocks with a density of about 8 to about 12 kg/m³ as produced in the above-mentioned processes and from open-cell M-F blocks produced in the above-mentioned processes which has subsequently been subjected to thermal compression. The degree of thermal compression of open-cell M-F blocks which are then subject to comminution to mm-sized particles can be up to 85%. Hence, the M-F particles used can comprise particles from blocks without thermal compression and particles from blocks compressed at 210 to 240°C for 4 to 4.5 minutes, depending upon the characteristics of the block supplied, with degrees of compression up to 85% e.g. a 20 mm thick block can be reduced in thickness to 3 mm, increasing the density from ca. 10 kg/m³ to ca. 67 kg/m³.

### Reactive adhesives

A very wide range of commercially available reactive adhesives can be used for bonding the porous open-cell melamine-formaldehyde (M-F) resin particles, polyurethane foams and latexes of the present invention e.g. at least bifunctional compounds such as polyisocyanates which react with reactively available groups, e.g. hydroxy groups, on the mm-sized particles of polyurethane foam, mm-sized latex particles and mm-sized optionally at least partially compressed porous open-cell M-F resin particles of the present invention. The reactive adhesive can be a liquid, which can be applied as such or as a solution in a solvent, or a solid, in which case it is applied as a solution in a solvent.

According to another preferred embodiment of the first aspect of the present invention, said reactive adhesive is a polyisocyanate, said polyisocyanate being selected from the group consisting of aliphatic and aromatic polyisocyanates, with at least one aromatic polyisocyanate being preferred and with at least one aromatic polyisocyanate selected from the group consisting of diphenylmethane diisocyanates and toluene diisocyanates being particularly preferred.

Particularly suitable polyisocyanates are derived from polyisocyanates or mixtures thereof e.g. 1,6-hexane diisocyanate (HDI); toluylene diisocyanate (TDI); diphenylmethane-4,4'-diisocyanate (MDI); 1,4-cyclohexane diisocyanate and 4,4'-diisocyanate-dicyclohexylmethane; isophorondiisocyanate (IPDI); triphenylmethane-4,4',4"-tri-isocyanate, thiophosphoric acid tris(p-isocyanatophenyl ester).

Huntsman produces a large variety of MDI polyisocyanates under the tradename SUPRASEC e.g. SUPRASEC® 1000, pure MDI; SUPRASEC® 1004, modified MDI; SUPRASEC® 1007, MDI-based; SUPRASEC® 1100, pure MDI; SUPRASEC® 1306, pure MDI; SUPRASEC® 1400, pure MDI; SUPRASEC® 1412, MDI-based; SUPRASEC® 1612, MDI-based; SUPRASEC® 2004, modified MDI; SUPRASEC® 2008, MDI-based; SUPRASEC® 2010, MDI-based; SUPRASEC® 2018, MDI-based; SUPRASEC® 2020, modified MDI; SUPRASEC® 2021, MDI-based; SUPRASEC® 2023, MDI-based; SUPRASEC® 2029, modified MDI; SUPRASEC® 2030, MDI-based; SUPRASEC® 2034, MDI-based; SUPRASEC® 2049, MDI-based; SUPRASEC® 2050, MDI-based; SUPRASEC® 2054, MDI-based; SUPRASEC® 5005, polymeric MDI; SUPRASEC® 5025, polymeric MDI; and SUPRASEC® 5030, polymeric MDI.

Bayer Materials Science AG, Germany produces a large variety of polyisocyanates and blocked polyisocyanates under the tradename DESMODUR e.g. DESMODUR® N75, a 75% solution of a biuret HDI, DESMODUR® N100, a biuret HDT; DESMODUR® N3200, a biuret HDI (lower viscosity than DESMODUR® N100); DESMODUR® N3300, an HDI isocyanurate; DESMODUR® N3390, a 90% solution of an HDI isocyanurate; DESMODUR® L75, a 75% solution of a TDI-adduct, DESMODUR® IL, a TDI-isocyanurate; DESMODUR® IL 1351, a TDI-polyisocyanate; DESMODUR® HL, a TDI/HDI-polyisocyanate; DESMODUR® VL, a MDI-polyisocyanate; and DESMODUR® Z4370, an IPDI-isocyanurate.

### Accelerator

The concentration of reactive adhesive used can be reduced by using at least one accelerator i.e. a catalyst to accelerate the reaction between the reactive adhesive and reactive groups on the mm-sized particles being bonded together.

According to another preferred embodiment of the first aspect of the present invention, at least one accelerator is present during at least part of said mixing process, said accelerator being preferably selected from the group consisting of alkali's, amines (e.g. dimorpholino diethyl ether and tertiary amines, for example 4-phenylpropylpyridine, 1-methylimidazole and 1-vinylimidazole), metal carboxylates (e.g. zinc octoate), alkylmetalcarboxylates (e.g. dibutyltin dilaurate), and particularly preferably a tertiary amine.

### Latex

Synthetic rubber is made by the polymerization of a variety of petroleum-based precursors called monomers. The most prevalent synthetic rubbers are styrene-butadiene rubbers (SBR) derived from the copolymerization of styrene and 1,3-butadiene. Other synthetic rubbers are prepared from isoprene (2-methyl-1,3-butadiene), chloroprene (2-chloro-1,3-butadiene), and isobutylene (methylpropene) with a small percentage of isoprene for cross-linking. These and other monomers can be mixed in various proportions to be copolymerized to produce products with a range of physical, mechanical, and chemical properties. The monomers can be produced pure and the addition of impurities or additives can be controlled by design to give optimal properties. Polymerization of pure monomers can be better controlled to give a desired proportion of cis and trans double bonds. Such latexes have a density of about 55 to about 85 kg/m³.

According to a preferred embodiment of the first aspect of the present invention, the latex (e.g. synthetic rubber latex) is prepared with at least one monomer selected from the group consisting of styrene, 1,3-butadiene, isoprene, chloroprene ,neoprene and isobutylene.

### Polyurethane foam

Polyurethane (PU) is a polymer composed of a chain of organic units joined by carbamate (urethane) links. Polyurethane polymers are formed by reacting an isocyanate containing two or more isocyanates groups per molecule (R-(N=C=O)_{n ≥ 2}) with a polyol containing on average two or more hydroxy groups per molecule (R'-(OH)_{n ≥ 2}), in the presence of a catalyst. PU foam (including foam rubber) is optionally made using small amounts of blowing agents to give less dense foam, better cushioning/energy absorption or thermal insulation. The choices available for the isocyanates and polyols, in addition to other additives and processing conditions allow PU's to have the very wide range of properties that make them such widely used polymers.

Aromatic or aliphatic isocyanates can be used, the aromatic isocyanates, diphenylmethane diisocyanate (MDI) or toluene diisocyanate (TDI) are more reactive than aliphatic isocyanates, such as hexamethylene diisocyanate (HDI) or isophorone diisocyanate (IPDI). Isocyanates with functionality greater than two act as crosslinking sites.

Polyols are polymers in their own right and have on average two or more hydroxyl groups per molecule. Polyether polyols are mostly made by polymerizing ethylene oxide and propylene oxide. Polyester polyols are made similarly to polyester polymers. The polyols used to make polyurethanes are not "pure" compounds since they are often mixtures of similar molecules with different molecular weights and mixtures of molecules that contain different numbers of hydroxyl groups, which is why the "average functionality" is often mentioned. Despite their being complex mixtures, industrial grade polyols have their composition sufficiently well controlled to produce PU's having consistent properties. Polyols used to make rigid PU's have molecular weights in the hundreds, while those used to make flexible PU's have molecular weights up to ten thousand or more.

According to a preferred embodiment of the first and second aspects of the present invention, the polyurethane foam is prepared with at least one polyisocyanate selected from the group consisting of aliphatic and aromatic polyisocyanates, with at least one aromatic polyisocyanate being preferred and with at least one aromatic polyisocyanate selected from the group consisting of diphenylmethane diisocyanates and toluene diisocyanates being particularly preferred.

According to a preferred embodiment of the first and second aspects of the present invention, the polyurethane foam is prepared with at least one polyol selected from the group consisting of polyether polyols and polyester polyols.

Such polyurethane foams have a density of about 16 to about 60 kg/m³.

### Laminate

According to a third aspect of the present invention, a laminate is provided, the laminate comprising the composite material of the second aspect of the present invention.

According to a preferred embodiment of the third aspect according to the present invention, the laminate further comprises a backing material e.g. woven or non-woven microfibres, woven or non-woven macrofibres, woven or non-woven textiles, a material having cleaning properties [e.g. chammy, shammy, a synthetic shammy (e.g. non-woven viscose rayon), or a material directly mountable on a cleaning machine or holder] and/or a polyurethane foam.

According to another preferred embodiment of the third aspect according to the present invention, the laminate comprises a backing material laminated directly or indirectly to the composite material, said backing material being preferably a woven material, a non-woven material or Velcro®.

According to another preferred embodiment of the third aspect according to the present invention, the laminate comprises as backing material a synthetic shammy laminated directly or indirectly to the composite material, thereby producing a laminate whose two sides can be used for cleaning and drying respectively.

According to another preferred embodiment of the third aspect according to the present invention, the laminate comprises a backing material directly mountable on a cleaning machine or holder, said backing material directly mountable on a cleaning machine or holder being preferable a woven material, a non-woven material (e.g. non-woven polypropylene) or Velcro®.

According to another preferred embodiment of the third aspect of the present invention, the laminate further comprises as backing material a PU sponge, thereby producing a laminate whose two sides can be used for cleaning and mopping up of the resulting dirty water thereby produced respectively.

According to another preferred embodiment of the third aspect of the present invention, the laminate comprises a protective layer, which either can be stripped off or is dissolved in initial use to provide a cleaning surface.

### Use of the composite material

The composite material of the second aspect of the present invention and obtained by the process of the first aspect of the present invention can be used for a multiplicity of purposes including various cleaning applications and various insulation applications including noise and heat insulation.

According to a fourth aspect of the present invention, a use is provided for the composite material according to the second aspect of the present invention or laminate according to the third aspect of the present invention for polishing and/or cleaning applications with a liquid, preferably water, optionally with at least one cleaning-enhancing additive e.g. a degreaser, an alkaline cleaning-enhancing additive of an abrasive cleaning-enhancing additive.

According to a preferred embodiment of the fourth aspect of the present invention, the composite material is a pad and the liquid does not comprise a cleaning-enhancing additive.

According to a preferred embodiment of the fourth aspect of the present invention, the composite material is a pad and the liquid comprises at least one alkaline cleaning-enhacing additive. Examples of cleaning enhancing additives are the range of alkaline cleaners and floor cleaners from Wetrok e.g. Antiwax, a universal cleaner, Antiwax-forte, an alkaline industrial cleaner, Indumat, a universal cleaner, Klar, a soap cleaner, Reline, an alkaline cleaner for linoleum, Remat, an alkaline cleaner, Remat forte, an alkaline cleaner, Reshine, a universal cleaner, and Rewit 2000, a universal cleaner.

According to a preferred embodiment of the fourth aspect of the present invention, the composite material is a pad and the liquid comprises at least one abrasive cleaning-enhancing additive.

The pads may, for example, be cleaning discs 8 to 21 inches (20.32 to 53.34 cm) in diameter, cleaning wipes, cleaning sponges or replaceable sponges for mops.

According to another preferred embodiment of the fourth aspect of the present invention, the liquid comprises a non-alkaline degreaser, for example a degreaser which does not render aluminium white upon cleaning, with a combination with a defoaming agent, e.g. a silicone-based defoamer such as an emulsion of poly(dimethylsiloxane); EO/PO based defoamers, e.g. Foam Clean FC-series (e.g. FC-110) from GL Chem. The non-alkaline degreaser is preferably present in a concentration of about 0.10 Brix (0.10% by weight of solids) to about 1.00 Brix (1.0% by weight of solids). The degreaser is a detergent, which is preferably completely water-soluble and non-foaming. Examples of suitable degreasers are Chrisal Floor Cleaner Extra from Chrisal NV, Belgium, Biomex HDI from DCP Chemicals with a Brix value of 15 and a preferred dilution of 1 : 20; and the Libero Universal Cleaner from Wetrok.

According to another preferred embodiment of the fourth aspect of the present invention, the liquid comprises a non-alkaline degreaser.

According to another preferred embodiment of the fourth aspect of the present invention, the composite material is a pad and the pad is shaped to fit into or onto a tool. Such a tool can be a hand-held tool, such as a mop, or a motorised tool such as a cleaning machine.

According to another preferred embodiment of the fourth aspect of the present invention, the composite material is a pad and the pad is used in combination with a motorized floor cleaning machine on which it is mounted.

Mounting of the pad on the motorised floor cleaning machine can be realised by attaching Velcro® to it or lamination to a standard attachment for motorised floor cleaning machines using a hot melt sheet or a water-based glue. Mounted on a motorized floor cleaning machine composite pads according to the present invention are capable with degreaser-containing water of cleaning non-slip floors up to class R12 with a slip angle of 27-35 and a coefficient of friction of 0.51-0.70 under DIN 51130 and without appreciable wear up to class R11 with a slip angle of 19-27 and a coefficient of fraction of 0.34-0.51 under DIN 51130. Although after use the latex and/or PU parts of the dried pads stand proud of the open-cell M-F resin, upon wetting and contact with the floor the softer latex and/or PU parts of the pad are compressed thereby presenting a flat cleaning surface to the floor in which cleaning effectiveness of the open-cell M-F resin is undiminished. Subsequent thermal compression of the composite material after production surprisingly results in superior wear characteristics over composite material not subjected to subsequent thermal compression.

Small industrial and domestic motorised floor cleaning machines for cleaning purposes operate at 150 rpm. Higher rotation speeds are more for polishing floors.

Floors with an antislip finish with antislip characteristics up to class R12 under DIN 51130 are installed by Resitec, Belgium, although R12 is reserved for downhill floors in humid area's. Less than 3% of the antislip finished installed by Resitec, Belgium, have antislip characteristics of Class R12.

According to a fifth aspect of the present invention, a use is provided for the composite material according to the second aspect of the present invention or laminate according to the third aspect of the present invention for insulation applications.

### EXAMPLES

The floor cleaning tests were performed with various types of motorized floor cleaner as specified under the particular series of experiments either with a single 13 inch (33 cm) diameter pads laminated with a non-woven polypropylene backing which was attachable to the floor cleaner or with two 13 inch (33 cm) diameter pads each laminated with a non-woven polypropylene backing. The tests were performed on an industrial "flat floor" i.e. a concrete a floor and floors with an epoxy finish and with a terrazzo finish all with only minor surface irregularities and epoxy-finished floors with type R10 and R11 anti-slip surfaces according to DIN 51130, e.g. an Artline® floor coating. The Soltec Artline® floor coating is applied to concrete or screed which is clean, dust-free, dry, at least three weeks old and provided with an impregnation primer in the case of porous surfaces by applying four epoxy-layers, the first two with black particles dispersed therein which after hardening are sealed with two colourless epoxy layers thereby providing an epoxy R11-antislip surface according to DIN 51130.

The M-F pads used in the comparative experiments were cut from blocks of M-F resin and were not subjected to thermal compression. The pads used in the invention experiments were produced by the process of the first aspect of the present invention in which mm-sized particles comprising at least particles of a porous optionally at least partially compressed open-cell M-F resin and mm-sized particles of latex and/or mm-sized PU particles; mixing the particles with at least one reactive adhesive in a concentration of 6 to 18 g of aromatic polyisocyanate per 100 g of mm-sized particles; reacting the reactive adhesive with the particles in the presence of aerial moisture thereby bonding the particles together during the mixing process; transporting the mixture into a mould; and irreversibly compressing the mixture to a block in a mould without additional heat to a density greater than 0.50 g/cm³ to form a block of the composite material of the present invention to produce the following composite materials:

| composite material | | | | |
|---|---|---|---|---|
| | M-F particles (wt%) | latex particles (wt%) | PU-foam particles (wt%) | 25% thermal compression at 200°C |
| A | 70 | 30 | - | no |
| B | 70 | - | 30 | no |
| C | 50 | 50 | - | no |
| D | 50 | - | 50 | no |
| E | 50 | - | 50 | yes |

The weights of 33 cm (13 inch) diameter pads of M-F and of composite materials D and E are given in Table 1 together with the pad thickness and densities.

**Table 1:**

| composite material | Pad thickness [mm] | weight [g] | volume [m³] | density [kg/m³] |
|---|---|---|---|---|
| 100* M-F resin | 20 | 14 | 1.710 x 10⁻³ | 8.2 |
| 100# M-F resin | 25 | 97 | 1.996 x 10⁻³ | 48.6 |
| D | 20 | 109 | 1.710 x 10⁻³ | 63.7 |
| | 20 | 127 | 1.710 x 10⁻³ | 74.3 |
| E | 15 | 119 | 1.283 x 10⁻³ | 92.7 |
| | 15 | 118 | 1.283 x 10⁻³ | 92.0 |

| | | | | |
|---|---|---|---|---|
| * pads are cut from blocks of M-F resin without thermal compression # pads are cut from blocks of blends of mm sized particles of M-F resin with different qualities (white and grey) supplied by Charlott Produkte Dr Rauwald GmbH and have a central hole 85 mm in diameter | | | | |

Water absorption tests were carried out on 33 cm (13 inch) diameter pads of M-F pad and composite materials D and E. The weights are given below before water absorption, immediately after 30s submersion and after 30s hanging in Table 2 below.

**Table 2:**

| composite material | Pad thickness [mm] | Initial weight [g] | Pad weight immediately after 30s immersion in water [g] | Water absorbed by pad [g] | Water absorbed by pad/mm thickness [g] | Water retained by pad after 30s of hanging [g] | Water retained by pad [g] | Water retained by pad/mm thickness [g] |
|---|---|---|---|---|---|---|---|---|
| 100* M-F resin | 20 | 14 | 1570 | 1556 | 77.8 | 820 | 806 | 40.3 |
| | 20 | 14 | 1583 | 1569 | 78.4 | 785 | 771 | 38.55 |
| 100# M-F resin | 25 | 97 | 1829 | 1732 | 69.3 | 1576 | 1479 | 59.16 |
| | 25 | 97 | 1792 | 1695 | 67.8 | 1558 | 1461 | 58.44 |
| D | 20@ | 109 | | | | 1040 | 931 | 46.55 |
| | 20@ | 109 | | | | 1057 | 948 | 47.40 |
| | 20 | 127 | 1671 | 1544 | 77.2 | 1154 | 1027 | 51.35 |
| | 20 | 127 | 1745 | 1618 | 80.9 | 1361 | 1234 | 61.7 |
| | 20 | 127 | 1709 | 1582 | 79.1 | 1298 | 1171 | 58.55 |
| E | 15@ | 119 | | | | 1010 | 891 | 59.40 |
| | 15@ | 119 | | | | 1026 | 907 | 60.46 |
| | 15 | 118 | 1151 | 1033 | 68.87 | 925 | 807 | 58.0 |
| | 15 | 118 | 1191 | 1073 | 71.53 | 990 | 872 | 58.1 |

| | | | | | | | | |
|---|---|---|---|---|---|---|---|---|
| * pads are cut from blocks of M-F resin without thermal compression # pads are cut from blocks of blends of mm sized particles of M-F resin with different qualities (white and grey) supplied by Charlott Produkte Dr Rauwald GmbH with an 85 mm diameter hole @ water absorption experiments performed with pads laminated with a 5 mm thick and 33 cm in diameter backing pad of non-woven polypropylene weighing 30 g | | | | | | | | |

The absorption of water measured immediately after immersion in water for 30s when the thickness of the pads is taken into account are identical for non-thermally-compressed pads. However, there are considerable differences in the quantity of water retained after hanging for 30s, when the thickness of the pads is taken into account. Whereas, in the case of pads of melamine-formaldehyde pads about 40 g of water is retained/mm this increases to 50-60 g/mm for the pad of composite material D with 50 wt% melamine formaldehyde particles and 50 wt% polyurethane particles and M-F resin blend supplied by Charlott Produkte Dr Rauwald GmbH and composite material E produced upon compressing composite material D both exhibited about 60 g/mm.

### Examples 1 to 6: evaluation of pads comprising the composite material according to the present invention on floors with minor surface irregularities with water only i.e. without cleaning-enhancing additives:

The observations made in the evaluation of 33 cm (13 inch) diameter pads of M-F resin and type A, B, C, D and E composite materials on the cleaning of industrial floors using a Wetrok® Servomatic 43 KA motorised floor cleaner with a single pad rotating at 160 rpm and water without any cleaning-enhancing additives are summarized in Table 3 below.

**Table 3:**

| Example | composite material | Initial pad thickness [mm] | cleaning quality epoxy floors | polishing effect terrazzo and concrete | cleaning lifetime with motorized floor cleaner [m] |
|---|---|---|---|---|---|
| 1 (comparative) | 100* M-F resin | 20 | good | none | < 1515 |
| 2 (invention) | A | 20 | good | none | |
| 3 (invention) | B | 20 | good | none | |
| 4 (invention) | C | 20 | good | visibly observable | > 3030 |
| 5 (invention) | D | 20 | good | none | > 3030 |
| 6 (invention) | E | 15 | good | none | > 3030 & < 4545 |

| | | | | | |
|---|---|---|---|---|---|
| * pads are cut from blocks of melamine-formaldehyde resin without post-manufacturing thermal compression | | | | | |

The cleaning effect realised on epoxy floors with a R10 non-slip surface with_all the pads evaluated was adjudged to be good, but pads of type C, D and E composite materials according to the present invention exhibited significantly longer lifetimes i.e. greater than 3030 m (1000 m²) travelled compared with less than 1515 m (500 m²) travelled with the pad of M-F resin without post-manufacturing thermal compression. Furthermore, a visible polishing effect was observed with the pad of type C composite material on terrazzo and concrete floors.

### Examples 7-12: evaluation of pads comprising the composite material according to the present invention with water with degreaser with floors with minor surface irregularities

The observations made in the evaluation of 33 cm (13 inch) diameter pads of M-F resin and type A, B, C, D and E composite materials on the cleaning of industrial floors using a Wetrok® Servomatic 43 KA motorised floor cleaner with a single pad rotating at 160 rpm And water with a degreaser (100 mL of 5 Brix in 3L of water i.e. 0.17 Brix) are summarized in Table 4 below.

**Table 4:**

| Example | composite material | Initial pad thickness [mm] | cleaning quality epoxy floors | damage to pads after 2285 m cleaning of epoxy floor | cleaning lifetime with motorized floor cleaner [m] | polishing effect terrazzo and concrete |
|---|---|---|---|---|---|---|
| 7 (comp.) | 100* M-F resin | 20 | very good | parts ripped off | < 1515 | none |
| 8 (inv.) | A | 20 | very good | little wear/damage | | none |
| 9 (inv.) | B | 20 | very good | little wear/damage | | none |
| 10 (inv.) | C | 20 | very good | little wear/damage | > 3030 | visibly observable |
| 11 (inv.) | D | 20 | very good | little wear/damage | > 3030 | none |
| 12 (inv.) | E | 15 | very good | very little wear/damage | > 4545 | none |

| | | | | | | |
|---|---|---|---|---|---|---|
| * pads are cut from blocks of M-F resin without post-manufacturing thermal compression | | | | | | |

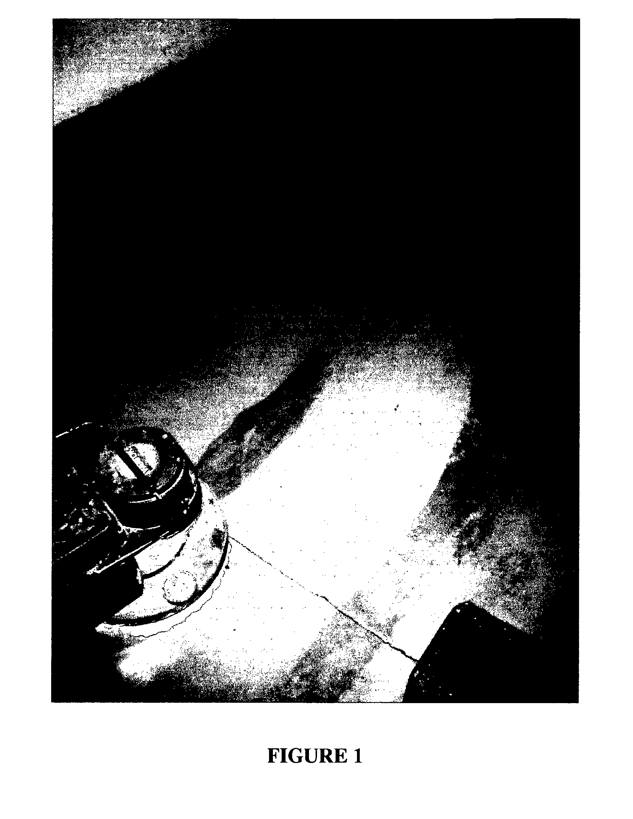

The cleaning effect realised on epoxy floors with a R10 non-slip surface with_all the pads evaluated was adjudged to be very good i.e. superior to the cleaning effect observed with water without cleaning-enhancing additives as shown in Figure 1 for a type D pad, but pads of type C, D and E composite materials according to the present invention exhibited significantly less wear and longer lifetimes i.e. little wear or very little wear and greater than 3030 m (1000 m²) travelled compared with parts ripped off and less than 1515 m (500 m²) travelled with the pad of M-F resin without post-manufacturing thermal compression. Moreover, the wear of the pad of composite material E after travelling 4545 m (1500 m²) was less i.e. the damage to the pad was less than that observed with pads of type A, B, C and D composite materials. Here again a visible polishing effect was observed with the pad of type C composite material on terrazzo and concrete floors.

### Examples 13-18: evaluation of pads comprising the composite material according to the present invention with water with degreaser (100 mL of 5 Brix degreaser in 3L of water i.e. 0.17 Brix) with floors with a R10 non-slip surface

The observations made in the evaluation of 33 cm (13 inch) diameter pads of melamine-formaldehyde resin and type A, B, C, D and E composite materials on the cleaning of anti-slip R10 industrial flooring using a LoLine NLL332 motorised floor cleaner with a reservoir but no sucking up of water from Numatic International Ltd with a single pad rotating at 200 rpm and water with degreaser (100 mL 5 Brix degreaser in 3L of water i.e. 0.17 Brix) are summarized in Table 5 below.

**Table 5:**

| Example | composite material | Initial pad thickness [mm] | cleaning quality | ability to cope with floor irregularities | damage to pads after 454m anti-slip R10 flooring |
|---|---|---|---|---|---|
| 13 (comparative) | 100* M-F resin | 20 | good | good | destroyed |
| 14 (invention) | A | 20 | good | good | wear but still usable |
| 15 (invention) | B | 20 | good | good | wear but still usable |
| 16 (invention) | C | 20 | good | good | wear but still usable |
| 17 (invention) | D | 20 | good | good | wear but still usable |
| 18 (invention) | E | 15 | good | very good | wear but still very usable |

| | | | | | |
|---|---|---|---|---|---|
| * pads are cut from blocks of M-F resin without thermal compression | | | | | |

The cleaning effect realised on the anti-slip R10 industrial flooring with all the pads evaluated was adjudged to be good i.e. inferior to that realised on smoother flooring and the ability of all the pads to cope with the floor irregularities was adjudged to be at least good with that of the pad of composite material E being adjudged to be very good. However, whereas after 454 m (200 m²) of anti-slip R10 industrial flooring there was visible wear with pads of type A, B, C, D and E composite materials according to the present invention, the pad of melamine-formaldehyde resin without post-manufacturing thermal compression was destroyed.

### Examples 19-24: evaluation of pads comprising the composite material according to the present invention with water with degreaser (500 mL of 5 Brix degreaser in 15L of water i.e. 0.17 Brix) with floors with a R11 non-slip surface

The observations made in the evaluation of 33 cm (13 inch) diameter pads of M-F resin and type C, D and E composite materials on the cleaning of anti-slip R11 industrial flooring using a DIBO® Scrubber CT70-BT70 motorised floor cleaner which accommodates two pads each 33 cm (13 inch) in diameter mounted laterally on the left and on the right both rotating at 200 rpm with the left pad rotating clockwise and the right pad rotating anti-clockwise and water with degreaser (100 mL of 5 Brix degreaser in 3L of water i.e. 0.17 Brix) are summarized in Table 6 below.

**Table 6:**

| | composite material | mounting position | Initial pad thickness [mm] | linear distance travelled [m] | Final pad thickness [mm] |
|---|---|---|---|---|---|
| 19 (comparative) | 100* M-F resin | right | 20 | 200 | 4 |
| 20 (comparative) | 100* M-F resin | right | 20 | 250 | 2 |
| 21 (invention) | D | left | 20 | 250 | 16 |
| 22 (invention) | D | left | 20 | 300 | 14 |
| 23 (invention) | E | right | 15 | 200 | 12 |
| 24 (invention) | E | left | 15 | 300 | 11# |

| | | | | | |
|---|---|---|---|---|---|
| * pads are cut from blocks of M-F resin without thermal compression # compared with the pad of invention example 23 the visual perception is that the pad is thinner than the pad of invention example 24, but the thickness measurement is made more difficult by the significantly greater surface roughness due to the higher wear of the M-F resin segments of the surface. | | | | | |

It is clear that tests with composite materials D and E are significantly more durable than the M-F resin pads. Moreover, composite material E appears to be more durable than composite material D with a thickness loss of 4 mm compared with a thickness loss of 6 mm after travelling a linear distance of 300 m.

### Examples 25-26: evaluation of type E pads comprising the composite material according to the present invention with water and water with degreaser (100 mL of 5 Brix degreaser in 3L of water i.e. 0.17 Brix) with an epoxy floors with a R10 non-slip surface

The purpose of these experiments was to realise images of demonstrating the cleaning efficacy of the type E pads comprising the composite material according to the present invention on an R10 non-slip epoxy floor. A LoLine NLL332 motorised floor cleaner with a reservoir but no sucking up of water from Numatic International Ltd with a single pad rotating at 200 rpm was used for these experiments also used in Examples 13 to 18.

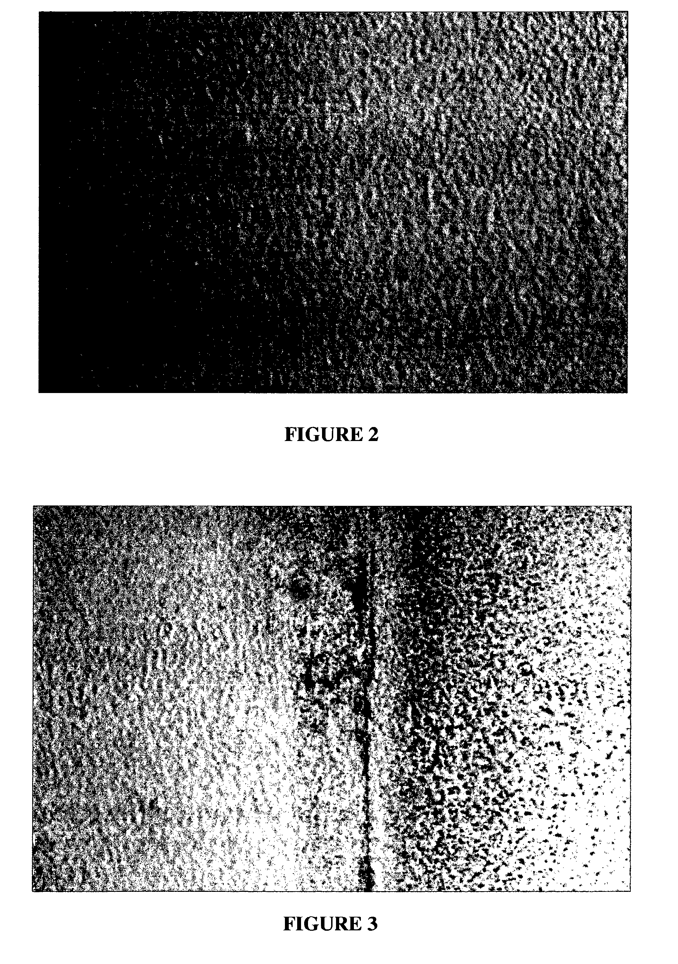

Figure 2 shows a high resolution black and white image of the original state of the floor under a mat clearly showing the structure of the grey-blue epoxy coating on the floor surface. Figure 3 shows a high resolution black and white image of a track made by cleaning with the type E pad with just water on the left side and the original dirty floor on the right. The odd speck of dirt in the cleaned area indicates a good level of cleaning. The other images were taken with a lower resolution camera.

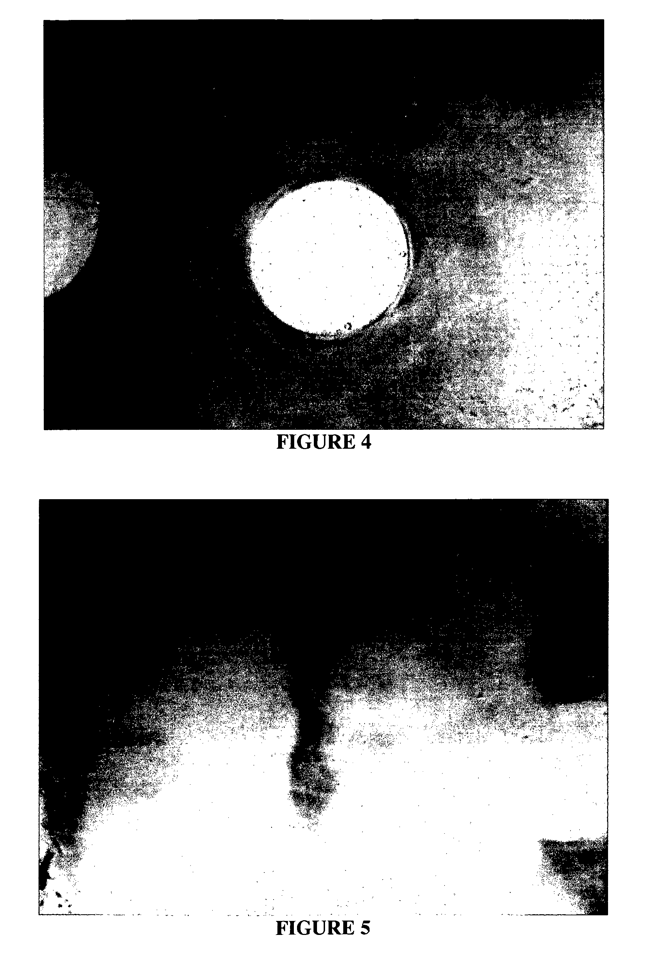

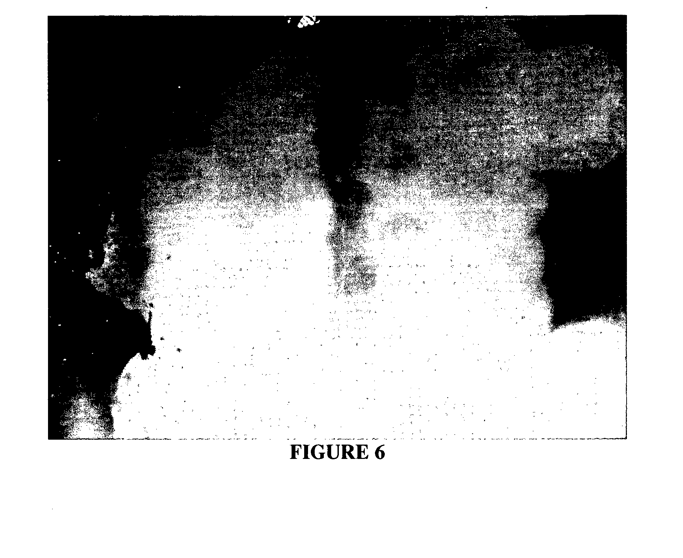

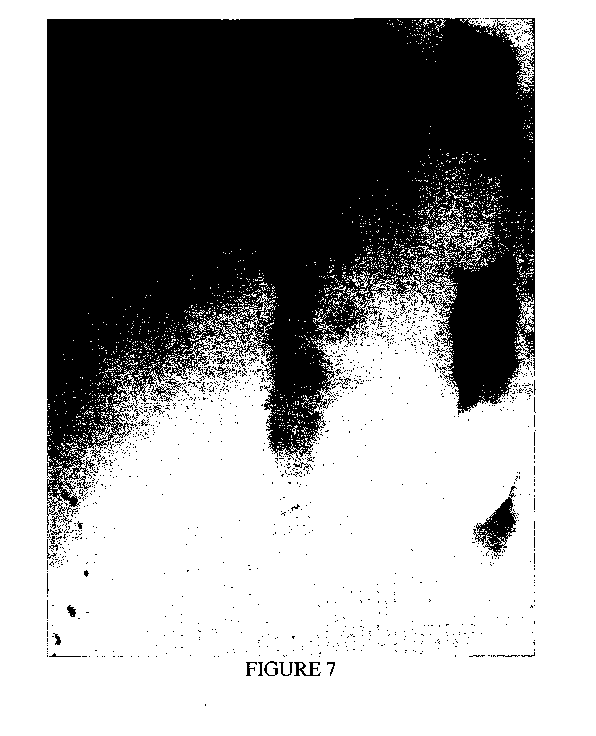

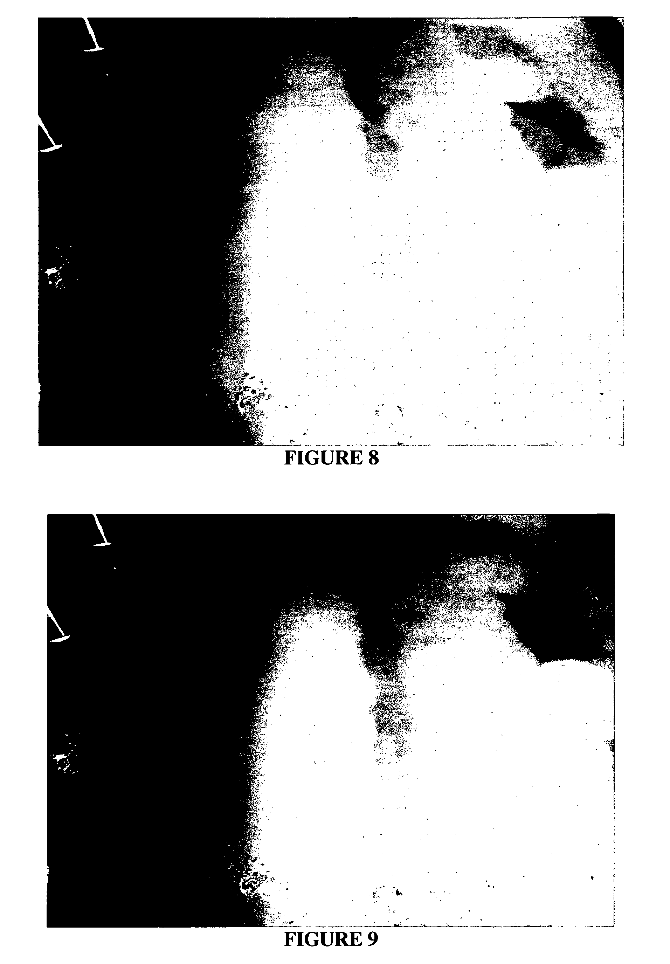

Figure 4 shows a circular patch prevented from becoming dirty by being under a foot of a table showing the original state of the blue-grey epoxy floor coating surrounded by the dirty floor prior to cleaning with the type E pad. Figures 5 to 9 show an approximately vertical uncleaned area with on the left a track made by cleaning with the type E pad with water to which degreaser had been added and on the right a track made by cleaning with the type E pad with just water. Visually there was a clear difference in cleaning quality psychometrically characterised as very good and good respectively, the difference being confirmed by independent observers. The very good level of cleaning obtained with the type E pad with water with degreaser provided an even level of cleanliness as seen in the left hand track, whereas the good level of cleaning obtained with the type E pad with just water seen on the right, provided a lower level of cleanliness over the whole area, there being clearly less clean areas among cleaner areas leading to a more patchy impression. These differences were very hard to reproduce in camera images and this problem was compounded by the poor image reproduction of electrophotographic printers.

## Claims

1. A process for producing a composite material, the process comprising the steps of: providing mm-sized particles comprising at least particles of a porous optionally at least partially compressed open-cell melamine formaldehyde resin and mm-sized particles of at least one non-rigid foamed resin; mixing said particles with at least one reactive adhesive in a concentration of 6 to 18 g of reactive adhesive per 100 g of mm-sized particles; reacting said reactive adhesive with said particles in the presence of aerial moisture thereby bonding said particles together during said mixing process; transporting said mixture into a mould; and irreversibly compressing said mixture to a block in a mould without additional heat to a density greater than 50 kg/m³ to form a block of said composite material.

2. The process according to claim 1, wherein said mm-sized particles of porous open-cell melamine formaldehyde are provided by grinding melamine formaldehyde resin comprising porous open-cell and non-porous parts into particles of porous open-cell and non-porous melamine formaldehyde resin and separating said porous open-cell melamine formaldehyde resin particles from said non-porous melamine formaldehyde resin particles.

3. The process according to claim 1, wherein said open cell melamine-formaldehyde particles are selected from particles produced by comminution of open-cell melamine formaldehyde blocks with a density of about 8 to about 12 kg/m³ and from open-cell melamine formaldehyde blocks produced which has subsequently been subjected to thermal compression

4. The process according to any one of claims 1 to 3, wherein said mm sized particles of at least one non-rigid foamed resin are mm-sized particles of latex and/or polyurethane foam particles.

5. The process according to claim 4, wherein at least 10% by weight of said mm-sized particles are mm-sized polyurethane foam particles.

6. The process according to any one of claim 4 or 5, wherein at least 10% by weight of said mm-sized particles are mm-sized latex particles.

7. The process according to any one of claims 1 to 6, wherein an accelerator is present during at least part of said mixing process.

8. The process according to any one of claims 1 to 7, wherein said composite produced is subsequently at least 15% permanently thermally compressed under a pressure of 1,5 x 10³ to 6.0 x 10³ kg/m².

9. The process according to any one of claims 1 to 8, wherein said composite produced is laminated with a backing material.

10. A composite material obtainable by the process according to any one of claims 1 to 9.

11. A laminate comprising a backing material and the composite material according to claim 10.

12. Use of a composite material according to claim 10 for polishing and/or cleaning applications with a liquid.

13. Use according to claim 12, wherein said composite material is a pad and the liquid does not comprise a cleaning-enhancing additive.

14. Use according to claim 13, wherein said composite material is a pad and said pad is used in combination with a motorized floor cleaning machine on which it is mounted.

## Patentansprüche

1. Verfahren zur Herstellung von Verbundmaterial, wobei das Verfahren folgende Schritte umfasst: Bereitstellen millimetergroßer Partikel, die mindestens Partikel aus einem porösen, optional mindestens teilweise komprimierten, offenzelligen Melamin-Formaldehyd-Harz und millimetergroßer Partikel aus mindestens einem nicht starren, aufgeschäumten Harz umfassen, Mischen der Partikel mit mindestens einem reaktiven Klebstoff in einer Konzentration von 6 bis 18 g des reaktiven Klebstoffs pro 100 g der millimetergroßen Partikel, Verreagieren des reaktiven Klebstoffs mit den Partikeln in Gegenwart von Luftfeuchte, wodurch die Partikel während des Mischverfahrens aneinander gebunden werden, Transportieren der Mischung in ein Formwerkzeug; und unumkehrbares Komprimieren der Mischung zu einem Block in einem Formwerkzeug ohne zusätzliche Wärme auf eine Dichte von mehr als 50 kg/m³, um einen Block des Verbundmaterials zu bilden.

2. Verfahren nach Anspruch 1, wobei die millimetergroßen Partikel aus porösem, offenzelligem Melamin-Formaldehyd durch Mahlen von Melamin-Formaldehyd-Harz, das poröse, offenzellige und nicht poröse Teile umfasst, zu Partikeln porösen, offenzelligen und nicht porösen Melamin-FormaldehydHarzes und Trennen der porösen, offenzelligen Melamin-Formaldehyd-Harz-Partikel von den nicht porösen Melamin-Formaldehyd-Harz-Partikeln bereitgestellt werden.

3. Verfahren nach Anspruch 1, wobei die offenzelligen Melamin-Formaldehyd-Partikel aus Partikeln ausgewählt sind, die durch Feinmahlen von Blöcken offenzelligen Melamin-Formaldehyds mit einer Dichte von etwa 8 bis etwa 12 kg/m³ hergestellt werden, und aus hergestellten Blöcken offenzelligen Melamin-Formaldehyds, die nachfolgend thermischer Komprimierung unterzogen wurden.

4. Verfahren nach einem der Ansprüche 1 bis 3, wobei die millimetergroßen Partikel aus mindestens einem nicht starren aufgeschäumten Harz millimetergroße Partikel aus Latex und/oder Polyurethanschaum-Partikel sind.

5. Verfahren nach Anspruch 4, wobei mindestens 10 Gew.-% der millimetergroßen Partikel millimetergroße Polyurethanschaum-Partikel sind.

6. Verfahren nach einem der Ansprüche 4 oder 5, wobei mindestens 10 Gew.-% der millimetergroßen Partikel millimetergroße Latexpartikel sind.

7. Verfahren nach einem der Ansprüche 1 bis 6, wobei während mindestens eines Teils des Mischverfahrens ein Beschleuniger anwesend ist.

8. Verfahren nach einem der Ansprüche 1 bis 7, wobei der hergestellte Verbundstoff nachfolgend unter einem Druck von 1,5 x 10³ bis 6,0 x 10³ kg/m² zu mindestens 15 % dauerhaft thermisch komprimiert wird.

9. Verfahren nach einem der Ansprüche 1 bis 8, wobei der hergestellte Verbundstoff auf ein Trägermaterial laminiert wird.

10. Verbundmaterial, erzielbar durch das Verfahren nach einem der Ansprüche 1 bis 9.

11. Laminat, ein Trägermaterial und das Verbundmaterial nach Anspruch 10 umfassend.

12. Verwendung eines Verbundmaterials nach Anspruch 10 für Politur- und/oder Reinigungsanwendungen mit einer Flüssigkeit.

13. Verwendung nach Anspruch 12, wobei das Verbundmaterial ein Kissen ist und die Flüssigkeit kein reinigungsverstärkendes Additiv umfasst.

14. Verwendung nach Anspruch 13, wobei das Verbundmaterial ein Kissen ist und das Kissen in Kombination mit einer motorisierten Bodenreinigungsmaschine verwendet wird, auf die es montiert ist.

## Revendications

1. Processus pour produire un matériau composite, le processus comprenant les étapes consistant à :
fournir des particules de taille millimétrique comprenant au moins des particules de résine de mélamine-formaldéhyde poreuse à cellules ouvertes, optionnellement au moins partiellement comprimée, et de particules de taille millimétrique d'au moins une résine alvéolaire non rigide ;
mélanger lesdites particules avec au moins un adhésif réactif dans une concentration de 6 à 18 g d'adhésif réactif pour 100 g de particules de taille millimétrique ;
faire réagir ledit adhésif réactif avec lesdites particules en présence d'humidité d'air liant de ce fait lesdites particules ensemble pendant ledit processus de mélange ;
transporter ledit mélange dans un moule ; et
comprimer de manière irréversible ledit mélange en un bloc dans un moule sans chaleur additionnelle jusqu'à une densité supérieure à 50 kg/m³ pour former un bloc dudit matériau composite.

2. Processus selon la revendication 1, dans lequel lesdites particules de taille millimétrique de mélamine-formaldéhyde poreuse à cellules ouvertes sont fournies en broyant de la résine de mélamine-formaldéhyde comprenant des parties non poreuses et poreuses à cellules ouvertes en particules de résine de mélamine-formaldéhyde non poreuses et poreuses à cellules ouvertes et en séparant lesdites particules de résine de mélamine-formaldéhyde poreuses à cellules ouvertes desdites particules de résine de mélamine-formaldéhyde non poreuses.

3. Processus selon la revendication 1, dans lequel lesdites particules de mélamine-formaldéhyde à cellules ouvertes sont sélectionnées à partir de particules produites par morcellement de blocs de mélamine-formaldéhyde à cellules ouvertes ayant une densité d'environ 8 à environ 12 kg/m³ et à partir de blocs de mélamine-formaldéhyde à cellules ouvertes produits qui ont par la suite été soumis à de la compression thermique

4. Processus selon l'une quelconque des revendications 1 à 3, dans lequel lesdites particules de taille millimétrique d'au moins une résine alvéolaire non rigide sont des particules de taille millimétrique de latex et/ou des particules de mousse de polyuréthane.

5. Processus selon la revendication 4, dans lequel au moins 10 % en poids desdites particules de taille millimétrique sont des particules de mousse de polyuréthane de taille millimétrique.

6. Processus selon l'une quelconque des revendications 4 ou 5, dans lequel au moins 10 % en poids desdites particules de taille millimétrique sont des particules de latex de taille millimétrique.

7. Processus selon l'une quelconque des revendications 1 à 6, dans lequel un accélérateur est présent pendant au moins une partie dudit processus de mélange.

8. Processus selon l'une quelconque des revendications 1 à 7, dans lequel ledit composite produit est par la suite thermiquement comprimé d'au moins 15 % de manière permanente sous une pression de 1,5 x 10³ à 6,0 x 10³ kg/m².

9. Processus selon l'une quelconque des revendications 1 à 8, dans lequel ledit composite produit est stratifié avec un matériau de support.

10. Matériau composite pouvant être obtenu par le processus selon l'une quelconque des revendications 1 à 9.

11. Stratifié comprenant un matériau de support et le matériau composite selon la revendication 10.

12. Utilisation d'un matériau composite selon la revendication 10 pour des applications de polissage et/ou de nettoyage avec un liquide.

13. Utilisation selon la revendication 12, dans laquelle ledit matériau composite est un patin et le liquide ne comprend pas d'additif améliorant le nettoyage.

14. Utilisation selon la revendication 13, dans laquelle ledit matériau composite est un patin et ledit patin est utilisé en combinaison avec une machine motorisée de nettoyage de sol sur laquelle il est monté.
